# EUROPÄISCHE PATENTSCHRIFT

(11) **EP 1 112 141 B1**
(45) Veröffentlichungstag und Bekanntmachung des Hinweises auf die Patenterteilung: **29.10.2003**
(21) Anmeldenummer: 99961970.3
(22) Anmeldetag: 15.07.1999
(51) Int. Cl.: B23P 6/00, B23P 15/00, B23K 13/01, F01D 5/00, F01D 5/30

(54) **VERFAHREN ZUR REPARATUR UND HERSTELLUNG EINES INTEGRAL BESCHAUFELTEN ROTORS FÜR EINE STRÖMUNGSMASCHINE**
METHOD FOR REPAIRING AND PRODUCING INTEGRALLY BLADED ROTORS FOR A HYDRAULIC ENGINE
PROCEDE DE REPARATION ET DE FABRICATION D'UN ROTOR A AUBAGE INTEGRE POUR MACHINE HYDRAULIQUE

(30) Priorität: 15.07.1998 DE 19831736
(43) Veröffentlichungstag der Anmeldung: 04.07.2001
(73) Patentinhaber: MTU Aero Engines GmbH, 80976 München (DE); KUKA Schweissanlagen GmbH, 86165 Augsburg (DE)
(72) Erfinder: MEIER, Reinhold, D-84405 Dorfen (DE); SCHÜTTE, Wilfried, D-82041 Oberhaching (DE); SCHMIDT, Mario, D-47441 Moers (DE); MAZAC, Karel, Dr., D-86316 Friedberg (DE)
(74) Vertreter: Zacharias, Frank L.
(86) Internationale Anmeldenummer: DE9902163
(87) Internationale Veröffentlichungsnummer: WO00003834

(56) Entgegenhaltungen:
- EP-A- 0 376 874
- CH-A- 246 346
- FR-A- 2 226 241
- FR-A- 2 631 268
- GB-A- 603 844
- US-A- 4 012 616
- US-A- 4 883 216
- US-A- 5 048 743
- US-A- 5 557 846

## Beschreibung

Die Erfindung betrifft ein Verfahren zur Reparatur eines integral beschaufelten Rotors für eine Strömungsmaschine, bei dem an der Umfangsfläche des Trägers mehrere vorstehende Schaufeln angeordnet sind, sowie ein Verfahren zur Herstellung eines integral beschaufelten Rotors für eine Strömungsmaschine, bei dem an einer Umfangsfläche eines Trägers mehrere vorstehende Schaufeln anzuordnen sind, welche jeweils an einen über die Umfangsfläche vorstehenden Stumpf mit einer Stirnfläche geschweißt werden.

Derartige integral beschaufelte Rotoren können durch Fräsen aus dem Vollen oder durch Schweißen der einzelnen Schaufeln an den Träger hergestellt werden. Aus der US 4,883,216 ist ein Verfahren zur Reparatur und Herstellung eines solchen Rotors bekannt, bei dem zunächst an über die Umfangsfläche des Trägers vorstehende Stümpfe um deren gesamten Umfang herum ein Kragen geschweißt wird und anschließend auf diese vergrößerte Verbindungsfläche aus Stumpf und Kragen eine (Ersatz-)Schaufel geschweißt wird, die an ihrem Schaufelfuß ebenfalls einen stark erweiterten Verbindungskragen aufweist. Nachteilig dabei ist, daß die Schaufel nicht in ihrer endgültigen/fertigen Form angeschweißt werden kann und durch die beiden Kragen anschließend extrem viel Nachbearbeitung erforderlich ist.

Die FR-A-22 26 241 offenbart ein Verfahren zum Verbinden von Schaufeln mit einem Rotorträger, bei dem die Schaufeln, die einen vorstehenden Fuß mit Stützfläche zur Übertragung der Fügekräfte aufweisen, mittels Widerstandsschweißen an den Rotorträger geschweißt werden.

Die Aufgabe der Erfindung besteht darin, ein Verfahren zur Reparatur eines Rotors der eingangs beschriebenen Gattung zu schaffen, bei dem der Ersatzschaufelabschnitt ohne viele zusätzliche Bearbeitungsschritte angeschweißt werden kann. Des weiteren soll ein Verfahren zur Herstellung eines Rotors der eingangs beschriebenen Gattung geschaffen werden, bei dem die Schaufeln ohne viele zusätzliche Bearbeitungsschritte an den Träger angeschweißt werden können.

Der das Reparaturverfahren betreffende Teil der Lösung ist erfindungsgemäß durch die Schritte gekennzeichnet: Entfernen eines zu ersetzenden Schaufelabschnitts unter Zurücklassung eines einen Teil der Schaufel bildenden Stumpfabschnitts, der eine Stirnfläche zum Verbinden mit einem Ersatzschaufelabschnitt aufweist; Anordnen eines Induktors um die Stirnfläche des Stumpfabschnitts herum, Positionieren des dem entfernten Schaufelabschnitt in Form und Größe entsprechenden Ersatzschaufelabschnitts an dem Stumpfabschnitt, wobei sich eine als Fügefläche dienende Oberfläche des Ersatzschaufelabschnitts und die Stirnfläche des Stumpfabschnitts im wesentlichen fluchtend und geringfügig beabstandet gegenüberstehen; und Verschweißen des Ersatzschaufelabschnitts mit dem Stumpfabschnitt durch Erregen des Induktors mit hochfrequentem Strom in einer Schutzgasatmosphäre und Zusammenfahren des Ersatzschaufelabschnitts und des Stumpfabschnitts unter Berührung der jeweils schmelzflüssigen Stirnfläche des Stumpfabschnitts und des Oberfläche der Ersatzschaufelabschnitts.

Ein Vorteil des erfindungsgemäßen Reparaturverfahrens besteht darin, daß sich der induzierte, hochfrequente Strom in den jeweiligen Fügeflächen konzentriert und diese lediglich im oberflächennahen Bereich schmelzflüssig werden, so daß der Ersatzschaufelabschnitt und der Stumpfabschnitt nur mit vergleichsweise geringer Kraft und über einen äußerst kurzen Zeitraum gegeneinander gedrückt werden. Aufgrund dessen kann der Ersatzschaufelabschnitt ohne weiteres im Blattbereich gehalten werden.

Weiterhin können auch besonders dünnwandige, mechanisch empfindliche Schaufeln auf diese Weise ersetzt bzw. befestigt werden. Es ist auch möglich, bei Neufertigung gegossene Schaufeln mit geschmiedeten Rotoren (Scheiben/Ringen) zu verbinden.

In einer bevorzugten Ausgestaltung wird der Induktor im Bereich der Schaufelvorderund Schaufelhinterkante mit größerem Abstand zur Fügefläche als im Mittenbereich der Schaufel bzw. des Stumpfabschnitts angeordnet, damit der induzierte, hochfrequente elektrische Strom die Stirnfläche des Stumpfabschnitts und die Oberfläche des Ersatzschaufelabschnitts an allen Stellen möglichst gleichmäßig erwärmt und lediglich die stirnflächen- bzw. oberflächennahen Bereiche schmelzflüssig werden.

Bevorzugt wird die Oberfläche des Ersatzschaufelabschnitts mit einem Abstand von etwa 2 mm zur Stirnfläche des Stumpfabschnittes vor dem Verschweißen positioniert, damit die Stirnfläche des Stumpfabschnitts einerseits und die Oberfläche des Ersatzschaufelabschnitts andererseits gleichmäßig erwärmt und lediglich bis zu einer Tiefe von etwa 0,1 mm schmelzflüssig werden.

Höchst bevorzugt wird der Ersatzschaufelabschnitt formschlüssig in einen Kunststoffblock eingepaßt, so daß der Ersatzschaufelabschnitt in seiner fertigen Form ohne zusätzliche Halte- oder Stützabschnitte an den Träger geschweißt werden kann. Auf diese Weise lassen sich kostspielige Bearbeitungsschritte am Ersatzschaufelabschnitt einsparen.

Höchst bevorzugt wird der Schritt Verschweißen in maximal 3 s durchgeführt, was eine rationelle Verfahrensweise gewährleistet und sicherstellt, daß der Stumpfabschnitt und der Ersatzschaufelabschnitt jeweils lediglich in seinem stirnflächen- bzw. oberflächennahen Bereich schmelzflüssig wird. Es ist zweckmäßig, daß der Ersatzschaufelabschnitt und der Stumpfabschnitt nach Berührung ihrer Oberfläche und ihrer Stirnfläche noch maximal 1 mm aufeinander zu verfahren werden, so daß etwaige Verunreinigungen in der Schmelze seitlich herausgedrückt werden, jedoch die umfängliche Verdickung in der Fügestelle klein gehalten wird.

In einer anderen bevorzugten Ausgestaltung wird der zu ersetzende, im allgemeinen beschädigte Schaufelblattabschnitt in einer sich bis zur Schaufelspitze erstreckenden Trennebene entfernt. Auf diese Weise muß bei Beschädigungen im Bereich der Schaufelspitze nicht die vollständige Schaufel, sondern lediglich ein kleiner Abschnitt ausgetauscht werden.

Der das Herstellungsverfahren betreffende Teil der Lösung ist erfindungsgemäß gekennzeichnet durch die Schritte: Anordnen eines Induktors um die Stirnfläche des Stumpfes herum; Positionieren einer Schaufel an dem Stumpf, wobei sich eine Oberfläche der Schaufel und die Stirnfläche des Stumpfes im wesentlichen fluchtend und geringfügig beabstandet gegenüberstehen; und Verschweißen der Schaufel mit dem Stumpf durch Erregen des Induktors mit hochfrequentem Strom in einer Schutzgasatmosphäre und Zusammenfahren der Schaufel und des Stumpfes unter Berührung der jeweils schmelzflüssigen Stirnfläche des Stumpfes und der Oberfläche der Schaufel.

Weitere Ausgestaltungen der Verfahren zur Reparatur und Herstellung sind in den Unteransprüchen beschrieben.

Im folgenden wir die Erfindung anhand eines Ausführungsbeispiels unter Bezugnahme auf eine Zeichnung näher erläutert. Es zeigen:
- Fig. 1: eine Ansicht in perspektivischer Darstellung eines Rotors mit zwei beschädigten Schaufeln,
- Fig. 2: ein vergrößerter Ausschnitt der Ansicht aus Fig. 1,
- Fig. 3: eine schematische Draufsicht auf einen Stumpfabschnitt, um den ein mit einer Stromquelle verbundener Induktor gemäß einer Ausgestaltung des erfindungsgemäßen Verfahrens angeordnet ist; und
- Fig. 4: eine ausgeschnittene Ansicht in perspektivischer Darstellung, bei der ein Schaufelblattabschnitt von einem (Kunststoff-)Block gehalten ist.

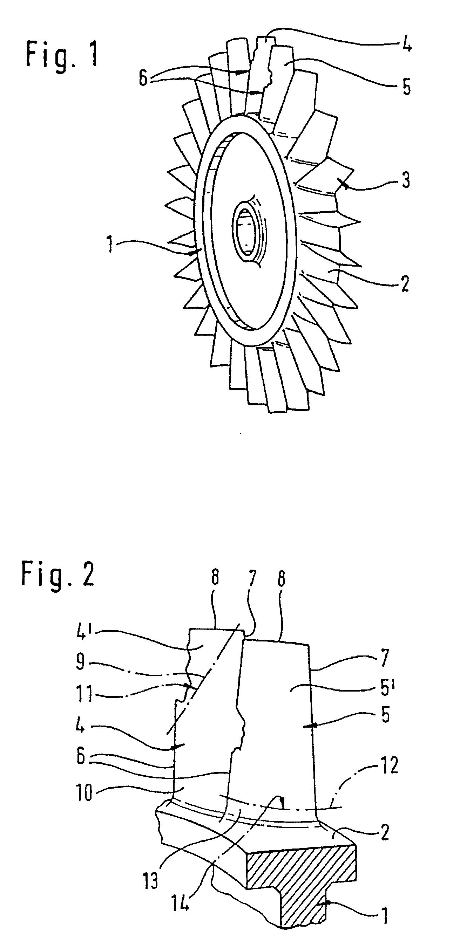

Fig. 1 zeigt eine perspektivische Darstellung des Rotors für eine Strömungsmaschine, der einen als Scheibe ausgebildeten Träger 1 aufweist, an dessen Umfangsfläche 2 zahlreiche Schaufeln 3 integral angeordnet sind und nach außen vorstehen. Die Schaufeln 3 sind im allgemeinen äquidistant an der Umfangsfläche 2 des Trägers 1 vorgesehen. Neben zahlreichen unbeschädigten Schaufeln 3 weisen zwei Schaufeln 4 und 5 im Bereich ihrer Schaufelvorderkante 6 Beschädigungen auf.

Wie in der ausgeschnittenen Ansicht gemäß Fig. 2 genauer zu erkennen ist, sind die Beschädigungen an den Schaufeln 4,5 jeweils an der Schaufelvorderkante 6 aufgetreten, während die gegenüberliegende Schaufelhinterkante 7 im wesentlichen unversehrt ist. Die Beschädigung an der Schaufel 4 ist in einem Bereich nahe einer Schaufelspitze 8 aufgetreten, so daß bei einer Ausgestaltung des erfindungsgemäßen Verfahrens zur Reparatur ein Schaufelblattabschnitt 4' gemäß Trennebene 9 entfernt wird und ein einen Teil der Schaufel 4 bzw. des Schaufelblatts bildender Stumpfabschnitt 10 mit einer Stirnfläche 11 zurückgelassen wird. Bei Beschädigungen wie an der Schaufel 4 ist es nicht erforderlich, daß die Schaufel 4 bzw. deren Schaufelblatt im wesentlichen vollständig entfernt bzw. abgetrennt wird.

Die Beschädigung an der Schaufel 5 ist in Richtung der Stapelachse im mittleren Bereich zwischen ihrer Schaufelspitze 8 und der Umfangsfläche 2 des Trägers 1 aufgetreten. In einem solchen Fall wird bei der beschädigten Schaufel 5 gemäß einer anderen Ausgestaltung des erfindungsgemäßen Verfahrens zur Reparatur ein Schaufelabschnitt 5' entlang einer Trennebene 12 nahezu vollständig entfernt, so daß ein etwa 2 bis 3 mm über die Umfangsfläche 2 des Trägers 1 vorstehender Stumpf 13 mit einer Stirnfläche 14 zurückbleibt. Während sich die Trennebene 9 der Schaufel 4 schräg zu einer Querschnittsfläche und bis zur Schaufelspitze 8 hin erstreckt, verläuft die Trennebene 12 bei der Schaufel 5 im wesentlichen parallel zu einer Querschnittsfläche der Schaufel 5. Die Stirnflächen 11 bzw. 14 der Schaufeln 4 bzw. 5 müssen nicht notwendigerweise eben ausgebildet sein, sondern können je nach Anwendungsfall auch eine Krümmung aufweisen.

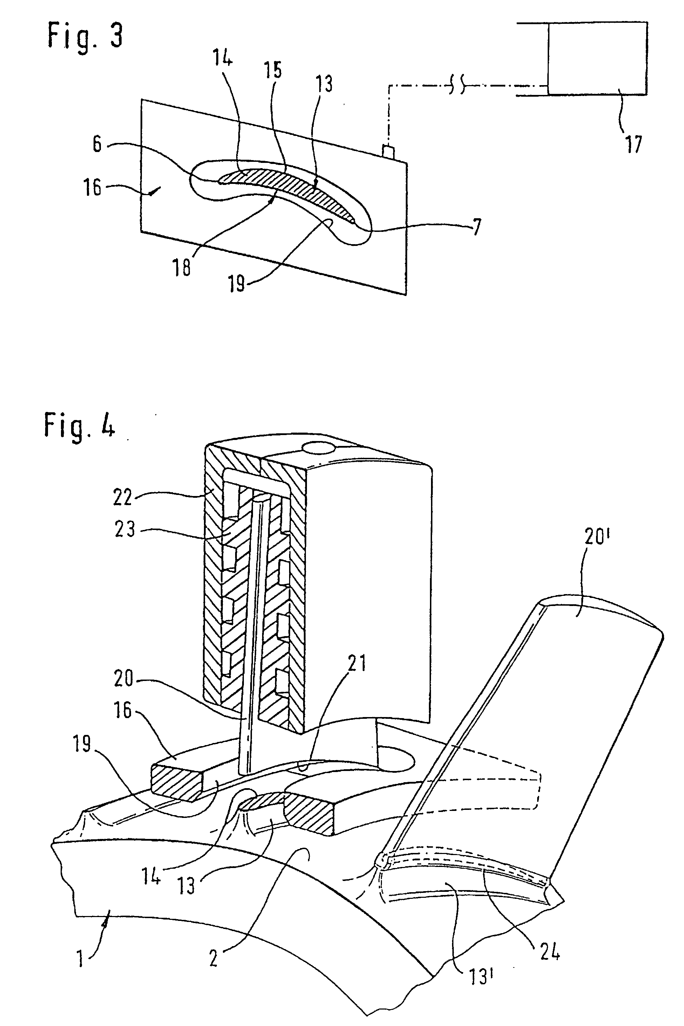

Entsprechend dem nächsten Schritt des erfindungsgemäßen Reparaturverfahrens wird im Bereich der Stirnfläche 14 des Stumpfes 13 um deren Umfang 15 herum ein Induktor 16 angeordnet, welcher mit einer Stromquelle 17 elektrisch verbunden ist. Wie in der Draufsicht gemäß Fig. 3 zu erkennen ist, ist der Abstand zwischen dem Induktor 16 und dem Stumpf 13 im Bereich der Schaufelvorder- und Schaufelhinterkante 6 und 7 größer als im Mittenbereich 18, um eine gleichmäßige Erwärmung der Fügestelle, die von der Stirnfläche 14 des Stumpfes 13 gebildet wird, beim anschließenden Schweißvorgang zu erzielen. Die Geometrie des Ausschnitts 19 in dem Induktor 16 ist je nach Anwendungsfall so zu wählen, daß der Werkstoff nur an der Fügestelle, d.h. der Stirnfläche 14 des Stumpfes 13, schmelzflüssig oder teigig wird, um einen schnellen Schweißvorgang zu ermöglichen und eine Nachbearbeitung der Fügestelle nach dem Schweißvorgang weitestgehend zu vermeiden.

In Fig. 4 ist der nächste Schritt des erfindungsgemäßen Reparaturverfahrens in einer perspektivischen Darstellung zu erkennen, in welche der Induktor 16 mit seinem Ausschnitt 19 um den Umfang 15 der Stirnfläche 14 von dem Stumpf 13, welcher über die Umfangsfläche 2 des Träger 1 vorsteht, angeordnet ist. Eine Ersatzschaufel 20 mit einer Oberfläche 21 ist in einer zweigeteilten Kassette 22 in einem Kunststoffblock 23 sicher gehalten. Die Kassette 22 ist in einem Maschinenschlitten fixiert. Die Oberfläche 21 der Ersatzschaufel 20 entspricht in Form und Krümmung der Stirnfläche 14 des Stumpfes 13. Zum Positionieren der Ersatzschaufel 20 für den anschließenden Schweißvorgang läßt sich der Maschinenschlitten so verfahren, daß die Oberfläche 21 der Ersatzschaufel 20 deckungsgleich bzw. fluchtend der Stirnfläche 14 des Stumpfes 13 gegenüberliegt. Zur Prüfung kann die Ersatzschaufel 20 unter Berührung ihrer Oberfläche 21 mit der Stirnfläche 14 zusammengefahren werden, wobei diese anschließend wieder auseinander zu fahren sind und vor dem anschließenden Schweißvorgang einen Abstand von etwa 2 mm zueinander haben.

Das anschließende Schweißen erfolgt in einer Schutzgas-Atmosphäre. Dabei wird der Induktur 16 mit einem Hochfrequenzstrom über etwa 1 s beaufschlagt. Die Beaufschlagung mit dem Hochfrequenzstrom und somit die Erwärmung wird abhängig vom eingesetzten Material so kurz wie möglich gehalten, so daß der Werkstoff des Stumpfes 13 bzw. der Ersatzschaufel 20 lediglich im Bereich der Fügefläche, die von der Stirnfläche 14 des Stumpfes 13 bzw. der Oberfläche 21 der Ersatzschaufel 20 gebildet wird, schmelzflüssig oder teigig wird. Nach der Erwärmungszeit wird die Ersatzschaufel 20 unter Berührung ihrer Oberfläche 21 mit der Stirnfläche 14 des Stumpfes 13 zusammengefahren, wobei weggesteuert ein Stauchweg von etwa 1 mm auftritt. Alternativ könnte das Zusammenfahren auch druckgesteuert erfolgen.

Fig. 4 zeigt eine Ersatzschaufel 20', die mittels Hochfrequenzschweißen mit einem Stumpf 13' verbunden ist. Im Bereich einer Fügestelle 24 ist dabei eine geringfügige Verdickung zu erkennen. Das Ausmaß dieser Verdickung hängt neben dem Stauchweg von dem Werkstoff des Stumpfes 13, 13' und der Ersatzschaufel 20,20' ab und muß gegebenenfalls in einer abschließenden Nachbearbeitung entfernt werden. In vielen Fällen ist die Verdickung an der Fügestelle 24 so gering, daß sie unter aerodynamischen Aspekten toleriert werden kann, so daß sich die abschließende Nachbearbeitung einsparen läßt.

Wenn bei einem Reparaturverfahren ein Schaufelabschnitt 4' gemäß Trennlinie 9 aus Fig. 2 entfernt wird und die entsprechende Fügestelle 24 mithin im Blattbereich liegt, ist aus aerodynamischen Gründen eine Nachbearbeitung der Blattoberfläche notwendig. Auch hierbei erweist sich der Einsatz von hochfrequentem Strom jedoch als vorteilhaft, da sich dieser an der Stirnfläche 11 des Stumpfabschnitts 10 sowie der entsprechenden Oberfläche des Ersatzschaufelabschnitts 20 konzentriert und lediglich die jeweils oberflächennahen Bereiche schmelzflüssig werden.

Das Herstellungsverfahren unterscheidet sich von dem oben beschriebenen Reparaturverfahren im wesentlichen nur dadurch, daß zunächst kein beschädigter Schaufelabschnitt zu entfernen ist und der Stumpf 13 stets die Form und Größe gemäß Trennebene 12 aus Fig. 2 aufweist.

## Patentansprüche

1. Verfahren zur Reparatur eines integral beschaufelten Rotors für eine Strömungsmaschine, bei dem an einer Umfangsfläche (2) eines Trägers (1) mehrere vorstehende Schaufeln (3,4,5) angeordnet sind, **gekennzeichnet durch** die Schritte: Entfernen eines zu ersetzenden Schaufelabschnitts (4',5') unter Zurücklassung eines einen Teil der Schaufel (3,4,5) bildenden Stumpfabschnitts (10,13), der eine Stirnfläche (11,14) zum Verbinden mit einem Ersatzschaufelabschnitt (20) aufweist; Anordnen eines Induktors (16) um die Stirnfläche (11,14) des Stumpfabschnitts (10,13) herum; Positionieren des dem entfernten Schaufelabschnitt (4',5') entsprechenden, im wesentlichen in seiner fertigen Form vorliegenden Ersatzschaufelabschnitts (20) an dem Stumpfabschnitt (10,13), wobei sich eine Oberfläche (21) des Ersatzschaufelabschnitts (20) und die Stirnfläche (11,14) des Stumpfabschnitts (10,13) im wesentlichen fluchtend und geringfügig beabstandet gegenüberstehen; und Verschweißen des Ersatzschaufelabschnitts (20) mit dem Stumpfabschnitt (10,13) in einer Schutzgasatmosphäre **durch** Erregen des Induktors (16) mit hochfrequentem Strom und Zusammenfahren des Ersatzschaufelabschnitts (20) und des Stumpfabschnitts (10,13) unter Berührung der - teigigen bis schmelzflüssigen - Stirnfläche (11,14) des Stumpfabschnitts (10,13) und der - teigigen bis schmelzflüssigen - Oberfläche (21) des Ersatzschaufelabschnitts (20).

2. Verfahren nach Anspruch 1, **dadurch gekennzeichnet, daß** der Induktor (16) im Bereich der Schaufelvorder- und Schaufelhinterkante (6 bzw. 7) mit größerem Abstand zur Fügestelle (24) als im Mittenbereich (18) der Schaufel (3) bzw. des Stumpfabschnitts (10,13) angeordnet wird.

3. Verfahren nach Anspruch 1 oder 2, **dadurch gekennzeichnet, daß** die Oberfläche (21) des Ersatzschaufelabschnitts (20) mit einem Abstand von etwa 2 mm zur Stirnfläche (11, 14) des Stumpfabschnitts (10, 13) positioniert wird.

4. Verfahren nach einem der vorhergehenden Ansprüche, **dadurch gekennzeichnet, daß** der Ersatzschaufelabschnitt (20) beim Positionieren zwischen zwei Greifern reibschlüssig eingeklemmt wird.

5. Verfahren nach einem der vorhergehenden Ansprüche 1 bis 3, **dadurch gekennzeichnet, daß** der Ersatzschaufelabschnitt (20) formschlüssig in einen Kunststoffblock (23) eingepaßt wird.

6. Verfahren nach einem der vorhergehenden Ansprüche, **dadurch gekennzeichnet, daß** der Schritt "Verschweißen" in maximal 3 s durchgeführt wird.

7. Verfahren nach einem der vorhergehenden Ansprüche, **dadurch gekennzeichnet, daß** der Ersatzschaufelabschnitt (20) und der Stumpfabschnitt (10,13) nach Berührung ihrer Oberfläche (21) und ihrer Stirnfläche (11,14) noch maximal 1 mm aufeinander zu verfahren werden.

8. Verfahren nach einem der vorhergehenden Ansprüche, **dadurch gekennzeichnet, daß** der zu ersetzende Schaufelblattabschnitt (4',5') in einer sich bis zur Schaufelspitze (8) erstreckenden Trennebene (9) entfernt wird.

9. Verfahren nach einem der Ansprüche 1 bis 7, **dadurch gekennzeichnet, daß** die Schaufel (3,4,5) im wesentlichen vollständig entfernt wird und ein etwa 2,5 mm über der Umfangsfläche (2) eines Trägers (1) vorstehender Stumpf (13) zurückbelassen wird.

10. Verfahren zur Herstellung eines integral beschaufelten Rotors für eine Strömungsmaschine, bei dem an einer Umfangsfläche (2) eines Trägers (1) mehrere vorstehende Schaufeln (3,4,5) anzuordnen sind, welche jeweils an einen über die Umfangsfläche (2) vorstehenden Stumpf (13) mit einer Stirnfläche (14) geschweißt werden, **gekennzeichnet durch** die Schritte: Anordnen eines Induktors (16) um die Stirnfläche (14) des Stumpfes (13) herum; Positionieren einer im wesentlichen in ihrer fertigen Form vorliegenden Schaufel (3,20) an dem Stumpf (13); wobei sich eine Oberfläche (21) der Schaufel (3,20) und die Stirnfläche (14) des Stumpfes (13) im wesentlichen fluchtend und geringfügig beabstandet gegenüberstehen; und Verschweißen der Schaufel (3,20) mit dem Stumpf (13) in einer Schutzgasatmosphäre **durch** Erregen des Induktors (16) mit hochfrequentem Strom und Zusammenfahren der Schaufel (3,20) und des Stumpfes (13) unter Berührung der - teigigen bis schmelzflüssigen - Stirnfläche (14) des Stumpfes (13) und der - teigigen bis schmelzflüssigen - Oberfläche (21) der Schaufel (3,20).

11. Verfahren nach Anspruch 10, **dadurch gekennzeichnet, daß** ein als Scheibe ausgebildeter Träger (1) vorgesehen wird.

12. Verfahren nach Anspruch 10, **dadurch gekennzeichnet, daß** ein als Ring ausgebildeter Träger (1) vorgesehen wird.

13. Verfahren nach Anspruch 12, **dadurch gekennzeichnet, daß** der Ring (1) aus mit SiC-Fasern verstärktem Titan hergestellt wird.

14. Verfahren nach einem der Ansprüche 10 bis 13, **dadurch gekennzeichnet, daß** die Schaufel (3,20) aus Titan hergestellt wird.

15. Verfahren nach einem der Ansprüche 10 bis 12, **dadurch gekennzeichnet, daß** die Schaufel(3,20) aus einer Kobalt- oder Nickel-Basislegierung hergestellt wird.

16. Verfahren nach einem der Ansprüche 10 bis 15, **dadurch gekennzeichnet, daß** eine Hohlschaufel (3,20) vorgesehen wird.

17. Verfahren nach einem der Ansprüche 1 bis 16, **dadurch gekennzeichnet, daß** als Induktor (16) ein mit minimalen Kosten hergestelltes Bauteil für einmalige Verwendung ("Einweginduktor") benutzt wird.

## Claims

1. Method for the repair of an integrally bladed rotor for a turbo-machine, with a plurality of projecting blades (3, 4, 5) arranged on a circumferential surface (2) of a carrier (1), **characterised by** the following steps: removal of a blade section (4', 5') to be replaced while leaving behind a stump section (10, 13) forming part of the blade (3, 4, 5) and having an end face (11, 14) for connecting to a replacement blade section (20); placement of an inductor (16) around the end face (11, 14) of the stump section (10, 13); positioning of the replacement blade section (20) corresponding to the removed blade section (4', 5') and essentially available in its finished form on the stump section (10, 13), one of the surfaces (21) of the replacement blade section (20) and the end face (11, 14) of the stump section (10, 13) being substantially aligned and lying opposite each other at a small distance; and welding of the replacement blade section (20) to the stump section (10, 13) in a protective atmosphere by exciting the inductor (16) with high-frequency current and bringing together the replacement blade section (20) and the stump section (10, 13) with contact between the - pasty to fusible - end face (11, 14) of the stump section (10, 13) and the - pasty to fusible - surface (21) of the replacement blade section (20).

2. Method according to claim 1, **characterised in that** the inductor (16) is arranged at a greater distance from the joint area (24) in the region of the leading and trailing edges (6 and 7 respectively) of the blade than in the central region (18) of the blade (3) or of the stump section (10, 13) respectively.

3. Method according to claim 1 or 2, **characterised in that** the surface (21) of the replacement blade section (20) is placed at a distance of approximately 2 mm from the end face (11, 14) of the stump section (10, 13).

4. Method according to any of the preceding claims, **characterised in that** the replacement blade section (20) is frictionally engaged between two gripping devices while being positioned.

5. Method according to any of claims 1 to 3, **characterised in that** the replacement blade section (20) is positively fitted into a plastic block (23).

6. Method according to any of the preceding claims, **characterised in that** the "welding" step is concluded in a maximum of 3 s.

7. Method according to any of the preceding claims, **characterised in that** the replacement blade section (20) and the stump section (10, 13) are brought further together by a maximum of 1 mm following contact between the surface (21) and the end face (11, 14).

8. Method according to any of the preceding claims, **characterised in that** the blade section (4', 5') to be replaced is removed in a plane of separation (9) extending to the blade tip (8).

9. Method according to any of claims 1 to 7, **characterised in that** the blade (3, 4, 5) is essentially removed completely, leaving a stump (13) projecting approximately 2.5 mm above the circumferential surface (2) of a carrier (1).

10. Method for the production of an integrally bladed rotor for a turbo-machine, whereby a plurality of projecting blades (3, 4, 5) is to be arranged on a circumferential surface (2) of a carrier (1), each being welded to a stump (13) projecting above the circumferential surface (2) and having an end face (14), **characterised by** the following steps: placement of an inductor (16) around the end face (14) of the stump (13); positioning of a blade (3, 20) essentially available in its finished form on the stump (13), one of the surfaces (21) of the blade (3, 20) and the end face (14) of the stump (13) being substantially aligned and lying opposite each other at a small distance; and welding of the blade (3, 20) to the stump (13) in a protective atmosphere by exciting the inductor (16) with high-frequency current and bringing together the blade (3, 20) and the stump (13) with contact between the - pasty to fusible - end face (14) of the stump (13) and the - pasty to fusible - surface (21) of the blade (3, 20).

11. Method according to claim 10, **characterised in that** the carrier (1) is designed as a disk.

12. Method according to claim 10, **characterised in that** the carrier (1) is designed as a ring.

13. Method according to claim 12, **characterised in that** the ring (1) is made of SiC fibre-reinforced titanium.

14. Method according to any of claims 10 to 13, **characterised in that** the blades (3, 20) are made of titanium.

15. Method according to any of claims 10 to 12, **characterised in that** the blades (3, 20) are made of a cobalt or nickel base alloy.

16. Method according to any of claims 10 to 15, **characterised in that** a hollow blade (3, 20) is provided.

17. Method according to any of claims 10 to 16, **characterised in that** a single-use part produced at minimum cost ("disposable inductor") is used as an inductor (16).

## Revendications

1. Procédé de réparation d'un rotor à aubage intégré pour une turbomachine, rotor dans lequel plusieurs aubes (3, 4, 5) en saillie sont disposées sur une surface périphérique (2) d'un support (1), **caractérisé par** les étapes consistant :
- à démonter une partie d'aube (4', 5') à remplacer, en laissant une partie tronquée (10, 13) formant une partie de l'aube (3, 4, 5), laquelle partie tronquée comprend une surface frontale (11, 14) permettant l'assemblage avec une partie (20) d'aube de remplacement ;
- à disposer un inducteur (16) tout autour de la surface frontale (11, 14) de la partie tronquée (10, 13) ;
- à positionner, sur la partie tronquée (10, 13), la partie (20) de l'aube de remplacement se présentant pratiquement dans sa forme définitive et correspondant à la partie d'aube (4', 5') démontée, où une surface (21) de la partie (20) de l'aube de remplacement et la surface frontale (11, 14) de la partie tronquée (10, 13) se font face en étant pratiquement alignées et légèrement espacées l'une de l'autre ; et
- à souder ensemble la partie (20) de l'aube de remplacement et la partie tronquée (10, 13) dans une atmosphère de gaz inerte, par excitation de l'inducteur (16) avec un courant à haute fréquence, et à réunir la partie (20) de l'aube de remplacement et la partie tronquée (10, 13) en plaçant au contact l'une de l'autre la surface frontale (11, 14) - se trouvant entre un état pâteux et un état de fusion - de la partie tronquée (10, 13), et la surface (21) - se trouvant entre un état pâteux et un état de fusion - de la partie (20) de l'aube de remplacement.

2. Procédé selon la revendication 1, **caractérisé en ce que** l'inducteur (16) est disposé, dans la zone comprise entre le bord avant de l'aube et le bord arrière de l'aube (6 et 7), en comportant, par rapport au point de jonction (24), un espacement plus important que dans la zone centrale (18) de l'aube (3) et de la partie tronquée (10, 13).

3. Procédé selon la revendication 1 ou 2, **caractérisé en ce que** la surface (21) de la partie (20) de l'aube de remplacement est positionnée en comportant un espacement environ de 2 mm par rapport à la surface frontale (11, 14) de la partie tronquée (10, 13).

4. Procédé selon l'une quelconque des revendications précédentes, **caractérisé en ce que** la partie (20) de l'aube de remplacement est encastrée par frottement entre deux griffes, lors du positionnement.

5. Procédé selon l'une quelconque des revendications précédentes 1 à 3, **caractérisé en ce que** la partie (20) de l'aube de remplacement est emboîtée, par sûreté de forme, dans un bloc (23) en matière plastique.

6. Procédé selon l'une quelconque des revendications précédentes, **caractérisé en ce que** l'étape de "soudure". est effectuée au maximum en 3 secondes.

7. Procédé selon l'une quelconque des revendications précédentes, **caractérisé en ce que** la partie (20) de l'aube de remplacement et la partie tronquée (10, 13) sont à déplacer, l'une par rapport à l'autre, au maximum de 1 mm après la mise en contact de sa surface (21) et de sa surface frontale (11, 14).

8. Procédé selon l'une quelconque des revendications précédentes, **caractérisé en ce que** la partie (4', 5') de l'aube à remplacer est démontée dans un plan de séparation (9) s'étendant jusqu'à la pointe (8) de l'aube.

9. Procédé selon l'une quelconque des revendications 1 à 7, **caractérisé en ce que** l'aube (3, 4, 5) est démontée pratiquement de façon complète et il reste une partie tronquée (13) dépassant environ de 2,5 mm de la surface périphérique (2) d'un support (1).

10. Procédé de fabrication d'un rotor à aubage intégré pour une turbomachine, rotor dans lequel plusieurs aubes (3, 4, 5) en saillie sont disposées sur une surface périphérique (2) d'un support (1), lesquelles aubes sont soudées à chaque fois sur une partie tronquée (13), comportant une surface frontale (14), dépassant de la surface périphérique (2), **caractérisé par** les étapes consistant :
- à disposer un inducteur (16) tout autour de la surface frontale (14) de la partie tronquée (13) ;
- à positionner, sur la partie tronquée (13), une aube (3, 20) se présentant pratiquement dans sa forme définitive, où une surface (21) de l'aube (3, 20) et la surface frontale (14) de la partie tronquée (13) se font face en étant pratiquement alignées et légèrement espacées l'une de l'autre ; et
- à souder ensemble l'aube (3, 20) et la partie tronquée (13) dans une atmosphère de gaz inerte, par excitation de l'inducteur (16) avec un courant à haute fréquence, et à réunir l'aube (3, 20) et la partie tronquée (13) en plaçant au contact l'une de l'autre la surface frontale (14) - se trouvant entre un état pâteux et un état de fusion - de la partie tronquée (13), et la surface (21) - se trouvant entre un état pâteux et un état de fusion - de l'aube (3, 20).

11. Procédé selon la revendication 10, **caractérisé en ce qu'**il est prévu un support (1) configuré en forme de disque.

12. Procédé selon la revendication 10, **caractérisé en ce qu'**il est prévu un support (1) configuré en forme d'anneau.

13. Procédé selon la revendication 12, **caractérisé en ce que** l'anneau (1) est fabriqué en titane renforcé par des fibres de carbure de silicium (SiC).

14. Procédé selon l'une quelconque des revendications 10 à 13, **caractérisé en ce que** l'aube (3, 20) est fabriquée en titane.

15. Procédé selon l'une quelconque des revendications 10 à 12, **caractérisé en ce que** l'aube (3, 20) est fabriquée en étant composée d'un alliage à base de cobalt ou de nickel.

16. Procédé selon l'une quelconque des revendications 10 à 15, **caractérisé en ce qu'**il est prévu une aube creuse (3, 20).

17. Procédé selon l'une quelconque des revendications 1 à 16, **caractérisé en ce que** l'on utilise, comme inducteur (16), un élément fabriqué en ayant un coût minimum, cet élément étant prévu pour servir une seule fois ("inducteur à usage unique").
